# EUROPÄISCHE PATENTANMELDUNG

(11) **EP 3 838 492 A1**
(43) Veröffentlichungstag der Anmeldung: **23.06.2021**
(21) Anmeldenummer: 19218900.9
(22) Anmeldetag: 20.12.2019
(51) Int. Cl.: B25C 1/06, H02K 11/00, H02K 33/00

(54) **ARBEITSGERÄT**

(71) Anmelder: Hilti Aktiengesellschaft, 9494 Schaan (LI)
(72) Erfinder: ABU ANTOUN, Chafic, 9470 Buchs (CH); BINDER, Albert, 9470 Buchs (CH); SCHMID, Florian, 9470 Buchs (CH); FRANZ, Thomas, 4254 Liesberg Dorf (CH); CHRISTEN, Reto, 8610 Uster (CH); SMAJIC, Jasmin, 8165 Schöfflisdorf (CH)
(74) Vertreter: Hilti Aktiengesellschaft Corporate Intellectual Property

(57) **Zusammenfassung**

Arbeitsgerät zum Bearbeiten eines Untergrunds, insbesondere handgeführtes Arbeitsgerät, insbesondere Setzgerät zum Eintreiben von Befestigungselementen in den Untergrund, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben entlang der Arbeitsachse von einer Startposition aus auf den Untergrund zu anzutreiben, wobei der Antrieb eine an dem Arbeitskolben angeordnete Kolbenspule und eine an dem Stator angeordnete erste Statorspule aufweist, wobei die Kolbenspule eine Kolbenspulenachse aufweist, welche quer, insbesondere senkrecht, zur Arbeitsachse orientiert ist.

## Beschreibung

Die vorliegende Erfindung betrifft ein Arbeitsgerät, wie beispielsweise ein Setzgerät zum Eintreiben von Befestigungselementen in einen Untergrund.

Derartige Arbeitsgeräte weisen oft einen Arbeitskolben auf, welcher dafür vorgesehen ist, sich entlang einer Arbeitsachse zu bewegen. Angetrieben wird der Arbeitskolben von einem Antrieb, welcher den Arbeitskolben beschleunigt. Die WO 2018/104406 A1 beschreibt einen Antrieb, welcher einen elektrischen Kondensator, einen an dem Arbeitskolben angeordneten Kurzschlussläufer und eine Erregerspule aufweist, welche bei einer Schnellentladung des Kondensators mit Strom durchflossen wird und ein Magnetfeld erzeugt, um den Arbeitskolben zu beschleunigen.

Setzgeräte weisen üblicherweise eine Aufnahme für ein Befestigungselement auf, aus welcher heraus ein darin aufgenommenes Befestigungselement entlang einer Arbeitsachse in den Untergrund befördert wird. Das Arbeitselement wird hierfür von dem Antrieb entlang der Arbeitsachse auf das Befestigungselement zu angetrieben. Aus der US 6,830,173 B2 ist ein Setzgerät mit einem Antrieb bekannt, welcher einen elektrischen Kondensator und eine Spule aufweist.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem vorzugsweise handgeführten Arbeitsgerät zum Bearbeiten eines Untergrunds, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben von einer Startposition aus entlang der Arbeitsachse auf den Untergrund zu anzutreiben, wobei der Antrieb eine an dem Arbeitskolben angeordnete Kolbenspule und eine an dem Stator angeordnete erste Statorspule aufweist, wobei die Kolbenspule eine Kolbenspulenachse aufweist, welche quer zur Arbeitsachse orientiert ist. Bevorzugt ist die Kolbenspulenachse senkrecht zur Arbeitsachse orientiert. Eine vorteilhafte Ausgestaltung ist dadurch gekennzeichnet, dass der Antrieb einen Schaltkreislauf umfasst, mittels dessen die Schnellentladung ausgelöst und/oder die Kolbenspule elektrisch mit dem Kondensator verbunden wird.

Eine vorteilhafte Ausgestaltung ist dadurch gekennzeichnet, dass die erste Statorspule eine erste Statorspulenachse aufweist, welche parallel zur Kolbenspulenachse orientiert ist. Bevorzugt ist die Kolbenspulenachse relativ zur ersten Statorspulenachse in Richtung der Arbeitsachse versetzt angeordnet, wenn sich der Arbeitskolben in der Startposition befindet. Eine vorteilhafte Ausgestaltung ist dadurch gekennzeichnet, dass das Arbeitsgerät ein Führungselement für eine Führung des Arbeitskolbens entlang der Arbeitsachse aufweist.

Eine vorteilhafte Ausgestaltung ist dadurch gekennzeichnet, dass die Kolbenspule und die erste Statorspule gleichsinnig mit Strom beaufschlagbar sind, um einander gleichgerichtete Magnetfelder zu erzeugen und die Kolbenspulenachse auf die erste Statorspulenachse zu zu beschleunigen. Eine weitere vorteilhafte Ausgestaltung ist dadurch gekennzeichnet, dass die Kolbenspule und die erste Statorspule gegensinnig mit Strom beaufschlagbar sind, um einander entgegengesetzte Magnetfelder zu erzeugen und die Kolbenspulenachse von der ersten Statorspulenachse weg zu beschleunigen.

Eine vorteilhafte Ausgestaltung ist dadurch gekennzeichnet, dass der Antrieb eine an dem Stator angeordnete zweite Statorspule aufweist, welche relativ zur Arbeitsachse gegenüber der ersten Statorspule angeordnet ist und eine zweite Statorspulenachse aufweist, welche parallel zur ersten Statorspulenachse orientiert ist, wobei die erste Statorspule und die zweite Statorspule gleichsinnig mit Strom beaufschlagbar sind, um gleichgerichtete Magnetfelder zu erzeugen und die Kolbenspule entlang der Arbeitsachse zu beschleunigen. Bevorzugt fällt die zweite Statorspulenachse mit der ersten Statorspulenachse zusammen.

Eine vorteilhafte Ausgestaltung ist dadurch gekennzeichnet, dass der Antrieb einen ersten Kondensator aufweist, wobei die erste Statorspule und/oder die Kolbenspule elektrisch mit dem Kondensator verbindbar ist, um bei einer Schnellentladung des ersten Kondensators mit Strom durchflossen zu werden und das Magnetfeld zu erzeugen.

Eine vorteilhafte Ausgestaltung ist dadurch gekennzeichnet, dass die Kolbenspule und die erste Statorspule elektrisch seriell miteinander verschaltet und relativ zueinander gleichsinnig gewickelt sind. Gemäss einer alternativen Ausgestaltung sind die Kolbenspule und die erste Statorspule seriell miteinander verschaltet und relativ zueinander gegensinnig gewickelt. Eine weitere vorteilhafte Ausgestaltung ist dadurch gekennzeichnet, dass die Kolbenspule einen Kolbenspulenaussendurchmesser aufweist, und wobei die erste Statorspule einen Statorspulenaussendurchmesser aufweist, welcher im Wesentlichen gleich gross ist wie der Kolbenspulenaussendurchmesser.

Eine vorteilhafte Ausgestaltung ist dadurch gekennzeichnet, dass der Stator zwei elektrische Statorkontakte aufweist und der Arbeitskolben zwei jeweils an einem der elektrischen Statorkontakte gleitende elektrische Kolbenkontakte aufweist. Bevorzugt weisen die elektrischen Statorkontakte jeweils eine Kontaktschiene und die elektrischen Kolbenkontakte jeweils eine Kontaktbürste oder einen Schleifring auf oder umgekehrt.

Eine vorteilhafte Ausgestaltung ist dadurch gekennzeichnet, dass der Stator einen Statorrahmen aus einem weichmagnetischen Material aufweist, welcher die erste Statorspule umgibt.

Eine vorteilhafte Ausgestaltung ist dadurch gekennzeichnet, dass das Arbeitsgerät als Setzgerät zum Eintreiben von Befestigungselementen in einen Untergrund ausgebildet ist, aufweisend eine Aufnahme, welche dafür vorgesehen ist, ein Befestigungselement aufzunehmen, wobei der Arbeitskolben oder der Stator dafür vorgesehen ist, ein in der Aufnahme aufgenommenes Befestigungselement entlang der Arbeitsachse in den Untergrund zu befördern, und wobei der Antrieb dafür vorgesehen ist, den Arbeitskolben entlang der Arbeitsachse auf das Befestigungselement zu anzutreiben.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Unter einem weichmagnetischen Material im Sinne der Erfindung ist ein Material zu verstehen, welches eine hohe magnetische Sättigungsflussdichte und insbesondere eine kleine Koerzitivfeldstärke aufweist und somit ein das Material durchsetzendes Magnetfeld verstärkt. Insbesondere weist das weichmagnetische Material des Statorrahmens und/oder des Kolbenrahmens eine Sättigungsflussdichte von mindestens 1,0 T, bevorzugt mindestens 1,3 T, besonders bevorzugt mindestens 1,5 T, auf. Unter einem elektrisch leitenden Material im Sinne der Erfindung ist ein Material zu verstehen, welches eine hohe spezifische elektrische Leitfähigkeit aufweist, so dass ein das Material durchsetzendes Magnetfeld in dem Material Wirbelströme erzeugt. Ein weichmagnetisches und/oder elektrisch leitendes Material besteht bevorzugt aus einem ferromagnetischen Material, besonders bevorzugt aus einem ferromagnetischen Metall, beispielsweise Eisen, Kobalt, Nickel, oder einer Legierung mit einem oder mehreren ferromagnetischen Metallen als Hauptbestandteil.

In den Zeichnungen ist die Erfindung in mehreren Ausführungsbeispielen dargestellt.

Es zeigen:
- Fig. 1: ein Arbeitsgerät in einem Längsschnitt,
- Fig. 2: eine Antrieb-Arbeitskolben-Einheit eines Arbeitsgeräts in einer perspektivischen Ansicht,
- Fig. 3: die Antrieb-Arbeitskolben-Einheit aus Fig. 2 in einer weiteren perspektivischen Ansicht,
- Fig. 4: einen Antrieb eines Arbeitsgeräts, und
- Fig. 5: ein elektrisches Schaltdiagramm eines Antriebs.

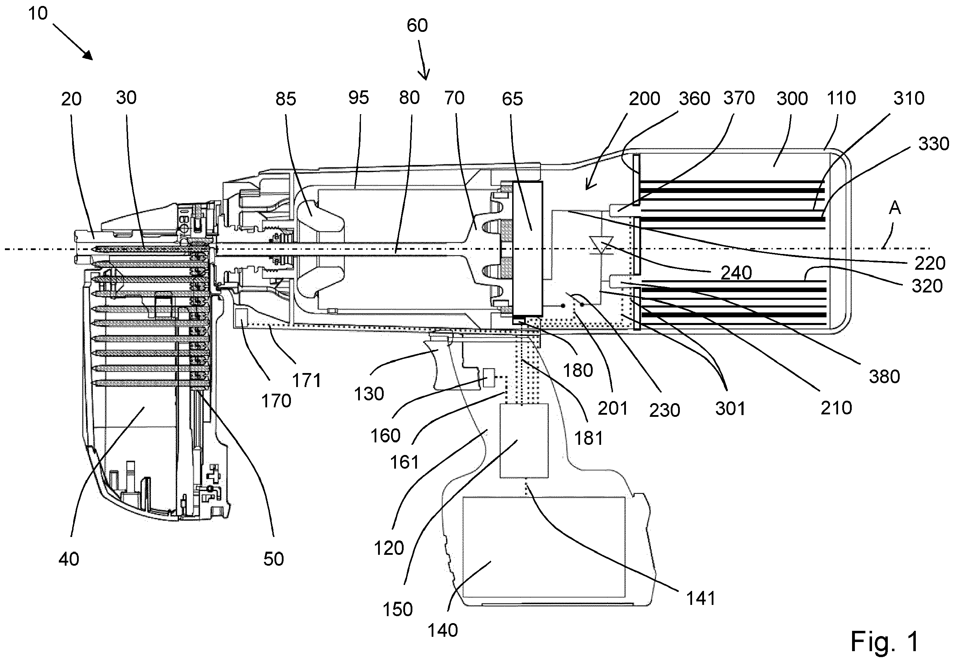

In Fig. 1 ist ein Arbeitsgerät 10 zum Bearbeiten eines nicht gezeigten Untergrunds in einem Längsschnitt dargestellt, welches als handgeführtes Setzgerät zum Eintreiben von Befestigungselementen in den Untergrund ausgebildet ist. Das Arbeitsgerät 10 weist eine als Bolzenführung ausgebildete Aufnahme 20 auf, in welcher ein als Nagel ausgebildetes Befestigungselement 30 aufgenommen ist, um entlang einer Arbeitsachse A in den Untergrund eingetrieben zu werden (in Fig. 1 nach links). Für eine Zuführung von Befestigungselementen zu der Aufnahme umfasst das Arbeitsgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf.

Das Arbeitsgerät 10 weist einen Arbeitskolben 60 auf, welcher einen Kolbenkörper 70 und eine Kolbenstange 80 umfasst. Der Arbeitskolben 60 ist dafür vorgesehen, das Befestigungselement 30 aus der Aufnahme 20 heraus entlang der Arbeitsachse A in den Untergrund zu befördern. Hierbei ist der Arbeitskolben 60 mit seinem Kolbenkörper 70 in einem Führungszylinder 95 entlang der Arbeitsachse A geführt. Bei nicht gezeigten Ausführungsbeispielen ist der Arbeitskolben von zwei, drei oder mehr Führungselementen, beispielsweise Führungsstangen entlang der Arbeitsachse geführt. Der Arbeitskolben 60 wird seinerseits von einem Antrieb 65 angetrieben, welcher einen Schaltkreislauf 200 und einen Kondensator 300 umfasst. Der Schaltkreislauf 200 ist dafür vorgesehen, eine elektrische Schnellentladung des zuvor aufgeladenen Kondensators 300 herbeizuführen und den dabei fliessenden Entladestrom dem Antrieb 65 zuzuführen.

Das Arbeitsgerät 10 umfasst weiterhin ein Gehäuse 110, in welchem der Antrieb 65 aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, einen an dem Antrieb 65 angeordneten Temperatursensor 180 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Arbeitsgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Arbeitsgerät 10 an einen nicht gezeigten Untergrund (in Fig. 1 nach links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 elektrisch aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und der Arbeitskolben 60 in seiner in Fig. 1 dargestellten setzbereiten Position ist, befindet sich das Arbeitsgerät 10 in einem setzbereiten Zustand. Dadurch, dass die Aufladung des Kondensators 300 erst durch das Anpressen des Arbeitsgeräts 10 an den Untergrund bewirkt wird, ist zur Erhöhung der Sicherheit von umstehenden Personen ein Setzvorgang nur dann ermöglicht, wenn das Arbeitsgerät 10 an den Untergrund angepresst ist. Bei nicht gezeigten Ausführungsbeispielen leitet die Steuereinheit den Kondensator-Aufladevorgang bereits bei einem Einschalten des Arbeitsgeräts oder bei einem Abheben des Arbeitsgeräts von dem Untergrund oder bei Beendigung eines vorausgegangenen Eintreibvorgangs ein.

Wenn bei setzbereitem Arbeitsgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu dem Antrieb 65 geleitet wird, indem der Kondensator 300 elektrisch entladen wird.

Der in Fig. 1 schematisch dargestellte Schaltkreislauf 200 umfasst hierzu zwei Entladeleitungen 210, 220, welche den Kondensator 300 mit dem Antrieb 65 verbinden und von denen zumindest eine Entladeleitung 210 von einem normalerweise geöffneten Entladeschalter 230 unterbrochen ist. Der Schaltkreislauf 200 bildet mit dem Antrieb 65 und dem Kondensator 300 unter Umständen einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs 65 aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer auf einer Trägerfolie 330 angeordneten Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch den Antrieb 65 fliesst, welcher den Arbeitskolben 60 auf die Aufnahme 20 sowie das darin aufgenommene Befestigungselement 30 zu antreibt. Sobald die Kolbenstange 80 des Arbeitskolbens 60 auf einen nicht näher bezeichneten Kopf des Befestigungselements 30 trifft, wird das Befestigungselement 30 von dem Arbeitskolben 60 in den Untergrund eingetrieben. Überschüssige Bewegungsenergie des Arbeitskolbens 60 wird von einem Bremselement 85 aus einem federelastischen und/oder dämpfenden Material, beispielsweise Gummi oder einem Elastomer, aufgenommen, indem sich der Arbeitskolben 60 mit seinem Kolbenkörper 70 gegen das Bremselement 85 bewegt und von diesem bis zu einem Stillstand abgebremst wird. Danach wird der Arbeitskolben 60 von einer nicht näher bezeichneten Rückstellvorrichtung in die setzbereite Position zurückgestellt.

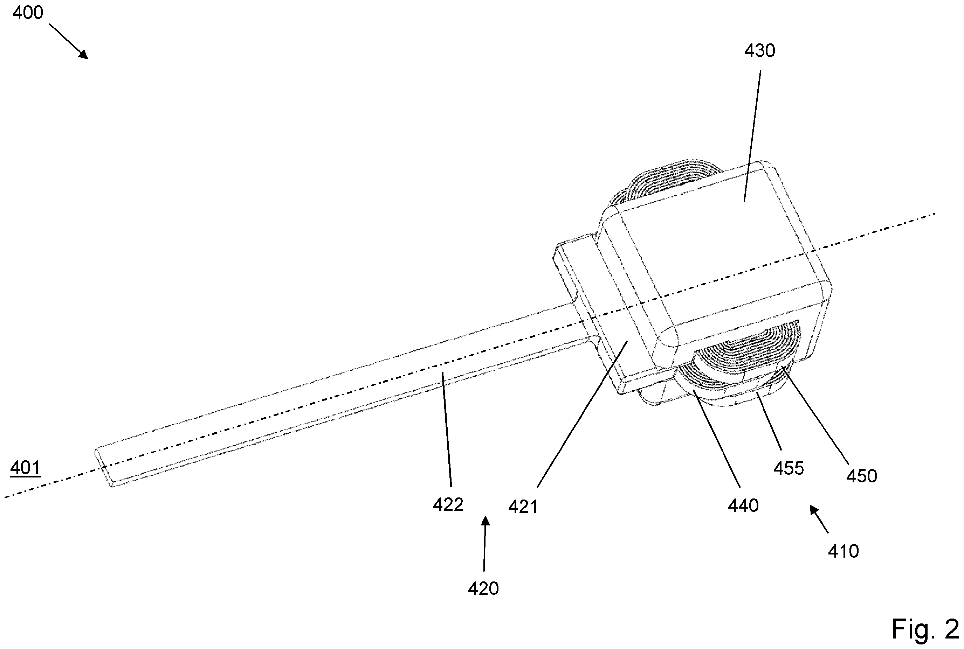

In den Fig. 2-3 ist eine Antrieb-Arbeitskolben-Einheit 400 eines Arbeitsgeräts, beispielsweise des in Fig. 1 gezeigten Arbeitsgeräts 10, aus verschiedenen Blickwinkeln dargestellt. Die Antrieb-Arbeitskolben-Einheit 400 umfasst einen teilweise gezeigten Antrieb 410, einen Arbeitskolben 420 und einen Stator 430. Der Arbeitskolben 420 weist einen Kolbenkörper 421 und eine Kolbenstange 422 auf und ist dafür vorgesehen, sich relativ zu dem Stator 430 entlang einer Arbeitsachse 401 zu bewegen. Der Antrieb 410 ist dafür vorgesehen, den Arbeitskolben 420 entlang der Arbeitsachse 401 anzutreiben. Hierzu umfasst der Antrieb 410 einen nicht gezeigten Kondensator und eine an dem Arbeitskolben 420 angeordnete Kolbenspule 440. Die Kolbenspule 440 ist elektrisch mit dem Kondensator verbindbar, um bei einer Schnellentladung des Kondensators mit Strom durchflossen zu werden und ein Magnetfeld zu erzeugen, welches eine abstossende Kraft zwischen der Kolbenspule 440 und dem Stator 430 bewirkt und den Arbeitskolben 420 relativ zu dem Stator 430 beschleunigt.

Darüber hinaus umfasst der Antrieb 410 eine an dem Stator 430 angeordnete erste Statorspule 450 und eine an dem Stator 430 angeordnete zweite Statorspule 455. Die Statorspulen 450, 455 sind elektrisch mit dem Kondensator verbindbar, um bei einer Schnellentladung des Kondensators mit Strom durchflossen zu werden und ein Magnetfeld zu erzeugen, welches eine abstossende Kraft zwischen den Statorspulen 450, 455 und dem Arbeitskolben 420 bewirkt und den Arbeitskolben 420 von dem Stator 430 weg beschleunigt. Die abstossende Kraft zwischen der Statorspule 450 und dem Arbeitskolben 420 wird beispielsweise dadurch bewirkt, dass das von den Statorspulen 450, 455 erzeugte Magnetfeld dem von der Kolbenspule 440 erzeugten Magnetfeld entgegengesetzt ist. Die erste Statorspule 450 und die zweite Statorspule 455 werden hierzu untereinander gleichsinnig, die Kolbenspule 440 demgegenüber gegensinnig und gleichzeitig mit elektrischem Strom beaufschlagt, indem der Kondensator entladen wird.

Die Statorspulen 450, 455 sind auf zwei Seiten der Arbeitsachse 401 einander gegenüber angeordnet und die Kolbenspule 440 ist zwischen den Statorspulen 450, 455 auf der Arbeitsachse 401 angeordnet. Die Kolbenspule 440 und die Statorspulen 450, 455 weisen jeweils eine Kolbenspulenachse beziehungsweise eine Statorspulenachse auf, welche relativ zur Arbeitsachse 401 senkrecht geneigt sind und parallel zueinander orientiert sind.

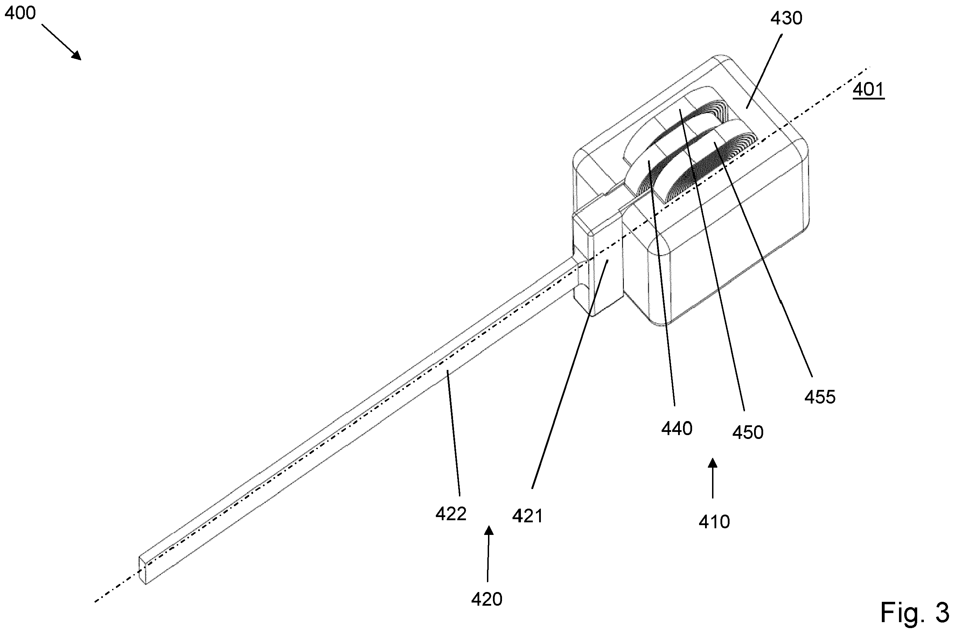

In Fig. 3 ist ein Antrieb 510 eines Arbeitsgeräts, beispielsweise des in Fig. 1 gezeigten Arbeitsgeräts 10 dargestellt. Der Antrieb 510 ist entlang einer Arbeitsachse 501 längs aufgeschnitten dargestellt und ist dafür vorgesehen, einen Arbeitskolben 520 mit einem Kolbenkörper 521 und einer Kolbenstange 522 entlang der Arbeitsachse 501 anzutreiben und relativ zu einem Stator 530 zu bewegen. Der Antrieb 510 umfasst einen Kondensator 560, einen Schaltkreislauf 570 mit einem Schalter 571 und einem als Diode, insbesondere Freilaufdiode ausgestalteten Stromsteuerelement 572, eine an dem Arbeitskolben 520 angeordnete Kolbenspule 540, eine an dem Stator 530 angeordnete erste Statorspule 550 und eine an dem Stator 530 angeordnete zweite Statorspule 550. Die Kolbenspule 540 und die Statorspulen 550, 555 sind elektrisch mit dem Kondensator 560 verbindbar, um bei einer Schnellentladung des Kondensators 560 mit Strom durchflossen zu werden. Ein Stromfluss durch die Kolbenspule 540 erzeugt dabei ein erstes Magnetfeld, ein Stromfluss durch die Statorspulen 550, 555 erzeugt ein zweites Magnetfeld.

Eine Elektrode des Kondensators 560 ist mit einem Eingang des Schalters 571 elektrisch verbunden und gegenüber einer Gegenelektrode des Kondensators 560 aufladbar, welche mit einem nicht gezeigten Massepotential, beispielsweise dem Minuspol eines elektrischen Akkumulators oder einer Batterie, elektrisch verbunden ist. Ein Ausgang des Schalters 571 ist mit einem Eingang der ersten Statorspule 550 elektrisch verbunden, bevorzugt fest verdrahtet. Ein Ausgang der ersten Statorspule 550 ist mit einem als Kontaktbürste ausgebildeten ersten elektrischen Statorkontakt 531, welchen der Stator 530 aufweist, elektrisch verbunden, bevorzugt fest verdrahtet. Ein Eingang der Kolbenspule 540 ist mit einem als Kontaktschiene ausgebildeten ersten Kolbenkontakt 541, welchen der Arbeitskolben 520 aufweist, elektrisch verbunden, bevorzugt fest verdrahtet. Der erste Kolbenkontakt 541 gleitet elektrisch leitend an dem ersten Statorkontakt 531 entlang, wenn sich der Arbeitskolben 520 entlang der Arbeitsachse 501 bewegt. Eine nicht gezeigte erste Feder belastet den ersten Statorkontakt 531 auf den ersten Kolbenkontakt 541 zu. Bei nicht gezeigten Ausführungsbeispielen belastet eine Feder zusätzlich oder alternativ den ersten Kolbenkontakt auf den ersten Statorkontakt zu.

Ein Ausgang der Kolbenspule 540 ist mit einem als Kontaktschiene ausgebildeten zweiten Kolbenkontakt 542, welchen der Arbeitskolben 520 aufweist, elektrisch verbunden, bevorzugt fest verdrahtet. Der zweite Kolbenkontakt 542 gleitet elektrisch leitend an einem zweiten Statorkontakt 532 entlang, wenn sich der Arbeitskolben 520 entlang der Arbeitsachse 501 bewegt. Der Stator 530 weist den zweiten Statorkontakt 532 auf, welcher als Kontaktbürste ausgebildet und mit einem Eingang der zweiten Statorspule 555 elektrisch verbunden ist. Ein Ausgang der zweiten Statorspule 555 ist schliesslich mit dem Massepotential elektrisch verbunden. Eine nicht gezeigte zweite Feder belastet den zweiten Statorkontakt 532 auf den zweiten Kolbenkontakt 542 zu. Bei nicht gezeigten Ausführungsbeispielen belastet eine Feder zusätzlich oder alternativ den zweiten Kolbenkontakt auf den zweiten Statorkontakt zu. Die Kolbenkontakte 541, 542 kontaktieren die Statorkontakte 531, 532 nicht notwendigerweise während der gesamten Bewegung des Arbeitskolbens. Bei einigen Anwendungen ist eine Kontaktierung während der ersten 0,5 ms bis 1 ms, insbesondere während der ersten 0,6 ms ausreichend. Die Kolbenkontakte 541, 542 weisen eine Länge in Richtung der Arbeitsachse 501 auf, welche für einige Anwendungsgebiete etwa 10 mm bis 30 mm beträgt.

Die Kolbenkontakte 541, 542 sind starr mit dem übrigen Arbeitskolben 520 verbunden und bewegen sich mit dem übrigen Arbeitskolben 520 mit. Bei nicht gezeigten Ausführungsbeispielen ist der erste und/oder der zweite Statorkontakt als Schleifring ausgebildet. Bei weiteren nicht gezeigten Ausführungsbeispielen ist der erste und/oder der zweite Statorkontakt als Kontaktschiene und der erste beziehungsweise der zweite Kolbenkontakt als Kontaktbürste oder Schleifring ausgebildet. Der zweite Kolbenkontakt 542 und der zweite Statorkontakt 532 sind bezüglich der Spulen 540, 550, 555 radial innerhalb der Statorspulen 550, 555 und der Kolbenspule 540 angeordnet.

Die Schnellentladung des Kondensators 560 über die Kolbenspule 540 und die Statorspule 550 ist mittels des Schaltkreislaufs 570 auslösbar, indem der Schalter 571 bei elektrisch aufgeladenem Kondensator 560 geschlossen und die Kolbenspule 540 und die Statorspulen 550, 555 elektrisch mit dem Kondensator 560 verbunden werden. Der elektrische Strom fliesst dann von dem Kondensator 560 durch den Schalter 571, durch die erste Statorspule 550, durch den ersten Statorkontakt 531 und den ersten Kolbenkontakt 541, durch die Kolbenspule 540, durch den zweiten Kolbenkontakt 542 und den zweiten Statorkontakt 532 und schliesslich durch die zweite Statorspule 555 zum Kondensator 560 beziehungsweise zum Massepotential.

Die Kolbenspule 540 und die Statorspule 550 weisen jeweils eine Kolbenspulenachse beziehungsweise eine Statorspulenachse auf, welche zur Arbeitsachse 501 senkrecht und zueinander parallel orientiert sind. Die Kolbenspule 540 und die Statorspulen 550, 555 sind gleichsinnig gewickelt und werden gegensinnig von dem elektrischen Strom durchflossen, so dass das von der Kolbenspule 540 erzeugte erste Magnetfeld und das von den Statorspulen 550, 555 erzeugte zweite Magnetfeld zueinander entgegengesetzt sind. Bei nicht gezeigten Ausführungsbeispielen sind die Spulen gegensinnig gewickelt und werden gleichsinnig von dem elektrischen Strom durchflossen. Dadurch wird eine abstossende Kraft zwischen den Statorspulen 550, 555 und der Kolbenspule 540 und somit zwischen dem Stator 530 und dem Arbeitskolben 520 bewirkt, so dass der Arbeitskolben 520 relativ zu dem Stator 530 beschleunigt wird. Die Kolbenspule 540 und die Statorspulen 550, 555 sind elektrisch seriell zueinander verschaltet, werden also gleichzeitig von elektrischem Strom durchflossen, wobei eine Stromstärke des durch die Spulen 540, 550, 555 fliessenden Stroms für die Kolbenspule 540 und die Statorspule 550 gleich ist. Vorzugsweise weisen die Kolbenspule 540 und die Statorspulen 550, 555 darüber hinaus jeweils gleich viele Spulenwindungen auf, so dass die von den Spulen 540, 550, 555 erzeugten Magnetfelder gleich stark sind.

Der Arbeitskolben 520 weist einen Kolbenrahmen 525 auf, welcher vorzugsweise aus einem weichmagnetischen Material besteht, wie beispielsweise Eisen oder eine Legierung davon, beispielsweise Stahl. Der Kolbenrahmen 525 umgibt die Kolbenspule 540. Dadurch wird das von der Kolbenspule 540 erzeugte erste Magnetfeld im Bereich der Statorspulen 550, 555 verstärkt und die abstossende Kraft zwischen dem Stator 530 und dem Arbeitskolben 520 erhöht. Bevorzugt besteht der Kolbenkörper 521 aus dem weichmagnetischen Material und bildet besonders bevorzugt den Kolbenrahmen. Ebenfalls bevorzugt besteht die Kolbenstange 522 aus dem weichmagnetischen Material und ist besonders bevorzugt einstückig mit dem Kolbenkörper 521 verbunden, wodurch unter Umständen eine Steifigkeit und/oder mechanische Robustheit des Arbeitskolbens 520 erhöht ist. Der Stator 530 weist einen Statorrahmen 535 auf, welcher vorzugsweise aus einem weichmagnetischen Material besteht, wie beispielsweise Eisen oder eine Legierung davon, beispielsweise Stahl. Der Statorrahmen 535 umgibt die Statorspulen 550, 555. Dadurch wird das von den Statorspulen 550, 555 erzeugte zweite Magnetfeld im Bereich der Kolbenspule 540 verstärkt und die abstossende Kraft zwischen dem Stator 530 und dem Arbeitskolben 520 erhöht.

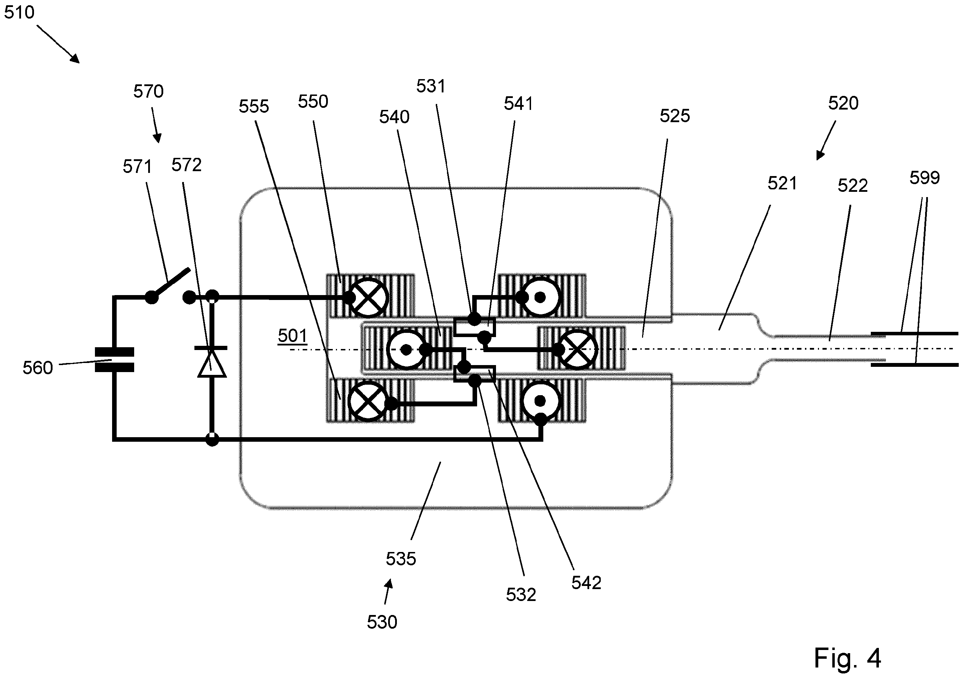

In der in Fig. 4 gezeigten Startposition ist die Kolbenspulenachse relativ zu den Statorspulenachsen in Richtung der Arbeitsachse 501 versetzt angeordnet. Dadurch ist eine Abstossung in Richtung der Arbeitsachse 501 verbessert. Für eine Führung des Arbeitskolbens 520 entlang der Arbeitsachse 501 weist das Arbeitsgerät eine beispielsweise als Führungsschiene ausgebildete Führung 599 auf.

wobei der Antrieb eine an dem Arbeitskolben angeordnete Diode aufweist, welche elektrisch mit der Kolbenspule verbunden ist. Eine vorteilhafte Ausgestaltung ist dadurch gekennzeichnet, dass der Antrieb einen die Diode umfassenden Schaltkreislauf aufweist, mittels dessen die Schnellentladung ausgelöst und/oder die Kolbenspule elektrisch mit dem Kondensator verbunden wird.

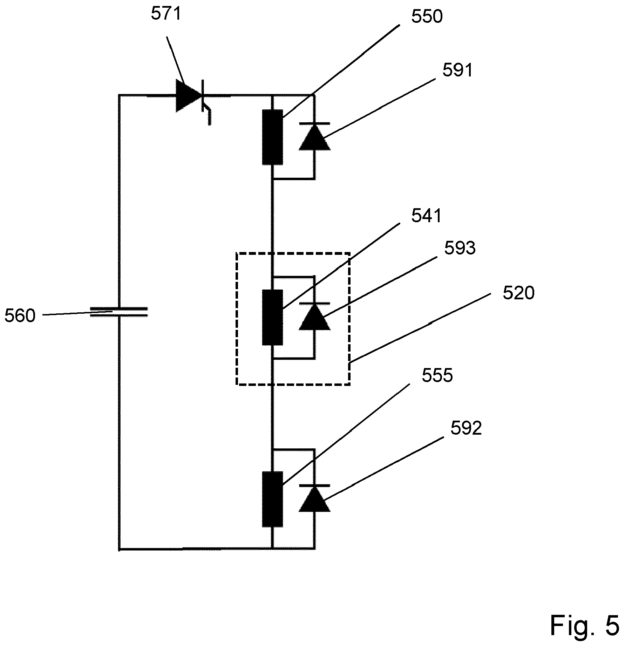

In Fig. 5 ist ein elektrisches Schaltdiagramm des in Fig. 4 gezeigten Antriebs 510 dargestellt. Der Antrieb 510 umfasst neben dem Kondensator 560, dem Schalter 571, der Kolbenspule 541, der ersten Statorspule 550 und der zweiten Statorspule 555 eine der ersten Statorspule 550 zugeordnete erste Diode 591, eine der zweiten Statorspule zugeordnete zweite Diode 592 sowie eine der Kolbenspule 541 zugeordnete Kolbendiode 593. Die Kolbendiode 593 ist ein Ausführungsbeispiel eines Stromsteuerelements zur Steuerung des durch die Kolbenspule 541 fliessenden elektrischen Stroms darstellt. Die Spulen 541, 550, 555 bilden mit dem Kondensator 560 einen Schwingkreis. Das Stromsteuerelement 593 dient nun dazu, ein Zurückschwingen dieses Schwingkreises nach der Entladung des Kondensators 560 zu unterdrücken. Damit werden die in Fig. 4 dargestellten Kolbenkontakte stromlos, so dass eine Gefahr von elektrischen Überschlägen zwischen den Kolbenkontakten und den Statorkontakten reduziert ist. Dies kann dazu genutzt werden, die beteiligten Kontaktschienen zu verkürzen, insbesondere auf eine Gleitlänge, die kürzer ist als ein Bewegungspfad des Arbeitskolbens 520 entlang der Arbeitsachse. Ermöglicht wird dies durch eine Anordnung, insbesondere Befestigung des Stromsteuerelements 593 auf dem Arbeitskolben 520. In der in Fig. 5 gezeigten Ausgestaltung als Freilaufdiode ist die Diode 593 elektrisch zu der Kolbenspule 541 parallel geschaltet.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Arbeitsgerät auch für andere Anwendungen einsetzbar ist, beispielsweise als Bohrhammer oder dergleichen.

## Patentansprüche

1. Arbeitsgerät zum Bearbeiten eines Untergrunds, insbesondere handgeführtes Arbeitsgerät, insbesondere Setzgerät zum Eintreiben von Befestigungselementen in den Untergrund, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben entlang der Arbeitsachse von einer Startposition aus auf den Untergrund zu anzutreiben, wobei der Antrieb eine an dem Arbeitskolben angeordnete Kolbenspule und eine an dem Stator angeordnete erste Statorspule aufweist, wobei die Kolbenspule eine Kolbenspulenachse aufweist, welche quer, insbesondere senkrecht, zur Arbeitsachse orientiert ist.

2. Arbeitsgerät nach Anspruch 1, wobei die erste Statorspule eine erste Statorspulenachse aufweist, welche parallel zur Kolbenspulenachse orientiert ist.

3. Arbeitsgerät nach Anspruch 2, wobei die Kolbenspulenachse relativ zur ersten Statorspulenachse in Richtung der Arbeitsachse versetzt angeordnet ist, wenn sich der Arbeitskolben in der Startposition befindet.

4. Arbeitsgerät nach einem der vorhergehenden Ansprüche, aufweisend ein Führungselement für eine Führung des Arbeitskolbens entlang der Arbeitsachse.

5. Arbeitsgerät nach einem der Ansprüche 2 bis 4, wobei die Kolbenspule und die erste Statorspule gleichsinnig mit Strom beaufschlagbar sind, um einander gleichgerichtete Magnetfelder zu erzeugen und die Kolbenspulenachse auf die erste Statorspulenachse zu zu beschleunigen.

6. Arbeitsgerät nach einem der Ansprüche 2 bis 5, wobei die Kolbenspule und die erste Statorspule gegensinnig mit Strom beaufschlagbar sind, um einander entgegengesetzte Magnetfelder zu erzeugen und die Kolbenspulenachse von der ersten Statorspulenachse weg zu beschleunigen.

7. Arbeitsgerät nach einem der Ansprüche 2 bis 6, wobei der Antrieb eine an dem Stator angeordnete zweite Statorspule aufweist, welche relativ zur Arbeitsachse gegenüber der ersten Statorspule angeordnet ist und eine zweite Statorspulenachse aufweist, welche parallel zur ersten Statorspulenachse orientiert ist und insbesondere mit der ersten Statorspulenachse zusammenfällt, wobei die erste Statorspule und die zweite Statorspule gleichsinnig mit Strom beaufschlagbar sind, um gleichgerichtete Magnetfelder zu erzeugen und die Kolbenspule entlang der Arbeitsachse zu beschleunigen.

8. Arbeitsgerät nach einem der vorhergehenden Ansprüche, wobei der Antrieb einen ersten Kondensator aufweist, wobei die erste Statorspule und/oder die Kolbenspule elektrisch mit dem Kondensator verbindbar ist, um bei einer Schnellentladung des ersten Kondensators mit Strom durchflossen zu werden und das Magnetfeld zu erzeugen.

9. Arbeitsgerät nach einem der vorhergehenden Ansprüche, wobei die Kolbenspule und die erste Statorspule elektrisch seriell miteinander verschaltet und relativ zueinander gleichsinnig oder gegensinnig gewickelt sind.

10. Arbeitsgerät nach einem der vorhergehenden Ansprüche, wobei die Kolbenspule einen Kolbenspulenaussendurchmesser aufweist, und wobei die erste Statorspule einen Statorspulenaussendurchmesser aufweist, welcher im Wesentlichen gleich gross ist wie der Kolbenspulenaussendurchmesser.

11. Arbeitsgerät nach einem der vorhergehenden Ansprüche, wobei der Stator zwei elektrische Statorkontakte aufweist und der Arbeitskolben zwei jeweils an einem der elektrischen Statorkontakte gleitende elektrische Kolbenkontakte aufweist.

12. Arbeitsgerät nach Anspruch 13, wobei die elektrischen Statorkontakte jeweils eine Kontaktschiene aufweisen und die elektrischen Kolbenkontakte jeweils eine Kontaktbürste oder einen Schleifring aufweisen oder umgekehrt.

13. Arbeitsgerät nach einem der vorhergehenden Ansprüche, wobei der Stator einen Statorrahmen aus einem weichmagnetischen Material aufweist, welcher die erste Statorspule umgibt.

14. Arbeitsgerät nach einem der vorhergehenden Ansprüche, aufweisend eine Aufnahme, welche dafür vorgesehen ist, ein Befestigungselement aufzunehmen, wobei der Arbeitskolben oder der Stator dafür vorgesehen ist, ein in der Aufnahme aufgenommenes Befestigungselement entlang der Arbeitsachse in den Untergrund zu befördern.
